# EUROPEAN PATENT SPECIFICATION

(11) **EP 3 021 645 B1**
(45) Date of publication and mention of the grant of the patent: **20.12.2017**
(21) Application number: 15193611.9
(22) Date of filing: 09.11.2015
(51) Int. Cl.: H05H 1/30, H05H 1/46, H05H 1/34

(54) **REDUCTION OF AMBIENT GAS ENTRAINMENT AND ION CURRENT NOISE IN PLASMA BASED SPECTROMETRY**
REDUZIERUNG DES UMGEBUNGSGASEINSCHLUSSES UND DES IONENSTROMRAUSCHENS IN PLASMABASIERTER SPEKTROMETRIE
RÉDUCTION DE L'ENTRAÎNEMENT DE GAZ AMBIANT ET BRUIT DE COURANT D'IONS EN SPECTROMÉTRIE À BASE DE PLASMA

(30) Priority: 11.11.2014 US 201414538396
(43) Date of publication of application: 18.05.2016
(73) Proprietor: Agilent Technologies, Inc. (A Delaware Corporation), Santa Clara, CA 95051 (US)
(72) Inventor: Duimstra, Joseph, Santa clara, CA 95051-7201 (US); Williams, Peter T., Santa Clara, CA 95051-7201 (US)
(74) Representative: Zimmermann, Tankred Klaus

(56) References cited:
- WO-A2-2005/020646
- US-A- 5 192 865
- US-A1- 2006 024 199
- D G Weirt ET AL: "Characteristics of an Inductively Coupled Argon Plasma Operating With Organic Aerosols Part 4. Noise Power Spectra*", , 1 January 1996 (1996-01-01), XP055241547, Retrieved from the Internet: URL:http://pubs.rsc.org/en/content/article pdf/1996/ja/ja9961101011 [retrieved on 2016-01-14]
- CRAIN J S ET AL: "NOISE POWER SPECTRAL CHARACTERISTICS OF AN INDUCTIVELY COUPLED PLASMA MASS SPECTROMETER", ANALYTICAL CHEMISTRY, AMERICAN CHEMICAL SOCIETY, US, vol. 61, no. 6, 15 March 1989 (1989-03-15) , pages 606-612, XP000032378, ISSN: 0003-2700, DOI: 10.1021/AC00181A022

## Description

### TECHNICAL FIELD

The present invention relates generally to plasma based spectrometry, and particularly to the reduction of ambient gas entrainment into plasma and ion current noise associated with plasma based spectrometry.

### BACKGROUND

Certain analytical instruments require that molecules of a sample be broken down to atoms in preparation for elemental analysis, for example to measure the concentration of trace metals in the sample. The instrument may be, for example, a spectrometer that includes a plasma-generating device (plasma source), such as an optical emission spectrometer (OES, also termed an atomic emission spectrometer or AES) or a mass spectrometer (MS). In a typical operation, a liquid sample is nebulized, i.e., converted to an aerosol (a fine spray or mist), by a nebulizer (typically of the pneumatic assisted type) and the aerosol is directed into a plasma plume generated by a plasma source. Alternatively, the sample may be a gaseous sample such as, for example, may be outputted from the column of a gas chromatograph (GC). The plasma source often is configured as a flow-through torch having two or more concentric tubes. Typically, a plasma-forming gas such as argon or nitrogen flows through an outer tube and is energized into a plasma by an appropriate energy source, and the aerosol flows through a coaxial central tube (or capillary) and is emitted into the as-generated plasma. The plasma is typically inductively coupled plasma (ICP) or microwave induced plasma (MIP). Exposure to plasma breaks the sample molecules down to atoms, or alternatively partially breaks the sample molecules into molecular fragments.

In the plasma, unbound electrons repeatedly collide with the sample atoms or ions. As a result of this process, the atoms or ions emit electromagnetic radiation (light) at wavelengths characteristic of their elemental identities. In an OES, this light is collected and focused by optics and directed to an analyzer, which may include, for example, a diffraction grating. The analyzer spectrally resolves the light into its component wavelengths, enabling the intensity of the light at each wavelength to be measured by an optical detector. The OES system then presents the data so acquired as a spectrum of atomic emission lines. The intensity of each line is indicative of the concentration (abundance) of the corresponding element of the sample.

In an MS, ions of the sample atoms are extracted from the plasma source and directed as an ion beam into a mass analyzer. The mass analyzer applies a time-varying electrical field, or a combination of electrical and magnetic fields, to spectrally resolve different types of ions on the basis of their mass-to-charge (m/z) ratios, enabling an ion detector to count each type of ion of a given m/z ratio. The MS system then presents the data so acquired as a spectrum of mass (m/z ratio) peaks. The intensity of each peak is indicative of the concentration (abundance) of the corresponding element of the sample.

Generally, the structures and operations of various types of analytical nebulizers, plasma sources, OES instruments, and MS instruments are known to persons skilled in the art, and accordingly are only briefly described herein as necessary for understanding the subject matter being disclosed.

When operating in the environment of an OES or MS, a plasma torch exhibits an audible "whistle" after the plasma source gas flow has been established and the plasma has been struck. Other investigators have observed similar phenomena in the context of both ICP-OES (Winge et al., Spatiotemporal Characteristics of the Inductively Coupled Plasma, Journal of Analytical Atomic Spectrometry, 3, 849-855 (1988), and ICP-MS (Ince et al., Noise in Inductively Coupled Plasma Mass Spectrometry: Some Preliminary Measurements, Journal of Analytical Atomic Spectroscopy, 8, 899-903 (1993)). The phenomenon has been postulated to be caused by a hydrodynamic effect occurring at the plasma torch exit (the end of the outer tube) where the hot plasma exits into the cool ambient gas (e.g., air). This effect is commonly known as annular vortex shedding, which has been postulated to be caused by the Kelvin-Hemholtz instability. Annular vortex shedding is often observed when a fluid jet having a more nearly top-hat profile (as opposed to a developed parabolic profile) enters an ambient medium at sufficiently high Reynolds number, and is a precursor to turbulence. The resulting presence of the audio frequency tones in the detector output of both ICP-OES and ICP-MS instruments causes undesirable variation in signal detection, hence contributing to a reduction in instrument precision, especially at sample frequencies that are on the order to the audio tone frequency.

A related problem involves the ambient gas (e.g., air) present in the torch chamber between the torch exit and the opposing end of the torch chamber, which may also correspond to the front end of an OES analyzer (photon inlet) or a mass analyzer (ion inlet). Annular vortex shedding causes ambient gas (air or other gas) to be entrained into the plasma. In OES, the resulting presence of oxygen in the plasma causes problems due to oxygen absorbance in the UV range. The oxygen absorbance interferes with the short wavelength emission from lines such as selenium and arsenic. In MS, the entrained gas may lead to increased background signal due to an increased number of non-analytical ions entering the mass analyzer.

An existing solution to these problems is to extend the length of the outer tube of the plasma torch downstream of the plasma. *See* above-referenced Winge et al. and Ince et al. While a longer torch is viable for OES, it is more susceptible to damage than a standard-length torch, typically due to devitrification of the outer tube resulting from increased contact with the sample. Moreover, a longer torch is not a useful solution for MS because the "sampling depth," i.e., the axial distance between the outlet end of the torch and the sampling cone at the front end of the MS, needs to be sufficiently small to allow for effective transport of ions from the plasma into the MS.

WO 2005/020646 A2 describes a reactive atom plasma processing tool having an aperture device. A flow of reactive gas can be injected into the center of an annular plasma. An aperture can be positioned relative to the plasma such that the effective footprint of the plasma can be changed without adjusting the gas flows or swapping out the tool. Once the aperture and tool are in position relative to a workpiece, reactive atom plasma processing can be used to modify the surface of the workpiece, such as to etch, smooth, polish, clean, and/or deposit material onto the workpiece. If necessary, a coolant can be circulated about the aperture. Multiple apertures can also be used to provide a variety of footprint sizes and/or shapes.

US 5,192,865 A describes a system and a method for use for analyzing samples in mass spectrometers using afterglow metastable species at atmospheric pressure to controllably dissociate, fragment and ionize sample is disclosed. The system and method can be used with any source of sample but a preferred embodiment utilizes an ultrasonic nebulizer to nebulize sample solutions, such as conventional liquid chromatography system effluents, into sample solution droplets, followed by desolvation thereof to provide nebulized sample particles, prior to sample entry to the "afterglow" portion of an electric discharge chamber. An ionization of a sample occurs as a result of interaction with energy released by relaxing metastable species. Operation at atmospheric pressure reduces operational, contamination and maintenance problems and allows easy introduction of sample in a liquid form.

### Summary

It is an object of the present invention to provide for a plasma source and related systems and methods that minimize ion current noise generated in the plasma source. There is also need for a plasma source and related systems and methods that minimize entrainment of ambient gas into plasma generated in the plasma source.

This object is achieved by the method and by the plasma source as defined in the independent claims.

To address the foregoing problems, in whole or in part, and/or other problems that may have been observed by persons skilled in the art, the present disclosure provides methods, processes, systems, apparatus, instruments, and/or devices, as described by way of example in implementations set forth below.

According to one embodiment, a method for producing sample atoms is defined according to claim 1.

According to another embodiment, a method for analyzing a liquid sample includes: producing sample atoms according to the method of claim 1; and measuring an attribute of the sample atoms.

According to another embodiment, a plasma source is defined according to claim 4.

According to another embodiment, a sample analysis system is defined according to claim 15.

In some embodiments, the analytical instrument defined in claim 15 is or includes a spectrometer such as, for example, a mass spectrometer or an optical emission spectrometer.

Other devices, apparatus, systems, methods, features and advantages of the invention will be or will become apparent to one with skill in the art upon examination of the following figures and detailed description.

### BRIEF DESCRIPTION OF THE DRAWINGS

The invention can be better understood by referring to the following figures. The components in the figures are not necessarily to scale, emphasis instead being placed upon illustrating the principles of the invention. In the figures, like reference numerals designate corresponding parts throughout the different views.
Figure 1 includes two data plots of signal intensity (log base 10 scale) as a function of frequency (Hz), specifically an audio power spectrum as acquired by an audio microphone positioned in the torch box of an inductively coupled plasma-mass spectrometer (ICP-MS) instrument and a noise power spectrum as acquired by the electron multiplier (EM) detector of the ICP-MS instrument.
Figure 2 is a schematic cross-sectional view of an example of a plasma source according to some embodiments of the present disclosure.
Figure 3A is a schematic perspective view of an example of a baffle that may be provided in the plasma source according to some embodiments.
Figure 3B is a schematic perspective view of another example of a baffle according to some embodiments.
Figure 4A is a photograph of a screen display of a noise power spectrum (signal intensity as a function of frequency) as acquired by the electron multiplier (EM) detector of an ICP-MS instrument while operating without the baffle illustrated in Figures 2 and 3.
Figure 4B is a photograph of a screen display of a noise power spectrum (signal intensity as a function of frequency) as acquired by the electron multiplier (EM) detector of an ICP-MS instrument while operating with the baffle illustrated in Figures 2 and 3.
Figure 5 is a schematic view of an example of a sample analysis system according to some embodiments.

### DETAILED DESCRIPTION

In the context of the present disclosure, the term "fluid" encompasses either a liquid or a gas, unless otherwise specified or the context dictates otherwise. The term "liquid" encompasses a solution and also a suspension in which solid particles are present in the liquid.

In the context of the present disclosure, the term "aerosol" generally refers to an assembly of liquid droplets and/or solid particles suspended in a gaseous medium long enough to be observed and measured. The size of aerosol droplets or particles is typically on the order of micrometers (µm). *See* Kulkarni et al., Aerosol Measurement, 3rd ed., John Wiley & Sons, Inc. (2011), p. 821. An aerosol may thus be considered as comprising liquid droplets and/or solid particles and a gas that entrains or carries the liquid droplets and/or solid particles.

In the context of the present disclosure, the term "atomization" refers to the process of breaking molecules down to atoms. Atomization may be carried out, for example, in a plasma enhanced environment. In the case of a liquid sample, "atomizing" may entail nebulizing the liquid sample to form an aerosol, followed by exposing the aerosol to plasma.

In the context of the present disclosure, a "liquid sample" includes one or more different types of analytes of interest (e.g., metals) dissolved or otherwise carried in a liquid matrix. The liquid matrix may be or include water and/or other solvents, soluble materials such as salts and/or dissolved solids, and may further include other compounds that are not of analytical interest.

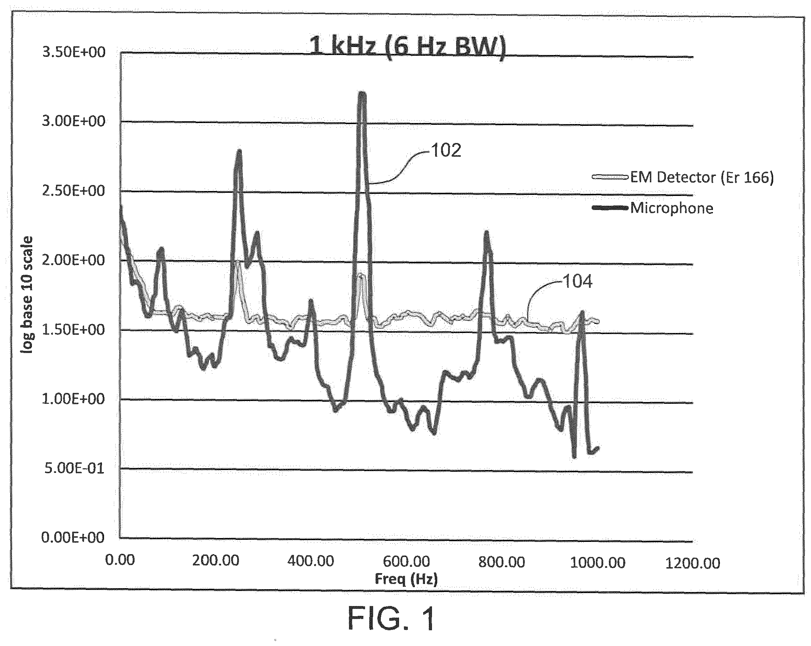

As noted above, the plasma torch of an optical emission spectrometer (OES) or mass spectrometer (MS) exhibits an audible "whistle" after the plasma has been struck. The pitch and volume of the whistle tone or tones depend on the RF or microwave power transferred to the plasma, the flow rate(s) of the gas(es) through the torch, and the "sampling depth," i.e., the axial distance between the exit end of the torch and the opposing boundary of the torch chamber (or "torch box") and the spectrometer. The inventors have observed the same audio tone in both the audio power spectrum of a plasma torch and the noise power spectrum of the ion detector of an inductively coupled plasma MS (ICP-MS) instrument (Agilent 7500ce ICP-MS, commercially available from Agilent Technologies, Inc., Santa Clara, California, USA) configured for measuring a trace amount of the erbium ion (Er+, m/z = 166) in solution. This observation is reflected in Figure 1, which includes two data plots of signal intensity (log base 10 scale) as a function of frequency (Hz), specifically an audio power spectrum as acquired by an audio microphone (plot 102) positioned in the torch chamber of the ICP-MS instrument and a noise power spectrum as acquired by the electron multiplier (EM) detector (plot 104) of the ICP-MS instrument. The analog signal from the EM detector was amplified using a current-to-voltage amplifier and analyzed in the frequency domain using a frequency spectrum analyzer. The audio microphone was positioned inside the torch chamber of the ICP-MS instrument, i.e., inside the housing enclosing the space into which the plasma plume is emitted from the end of the torch. The audio signal was fed into the second channel of the frequency spectrum analyzer. Figure 1 provides a direct comparison of the frequency dependence of the ion detector with that of the audio tones from the vortex shedding. The results strongly suggest that the vortex shedding was modulating the detector signal. Both the audio and detector signal changed with a change in plasma parameters such as power and gas flow.

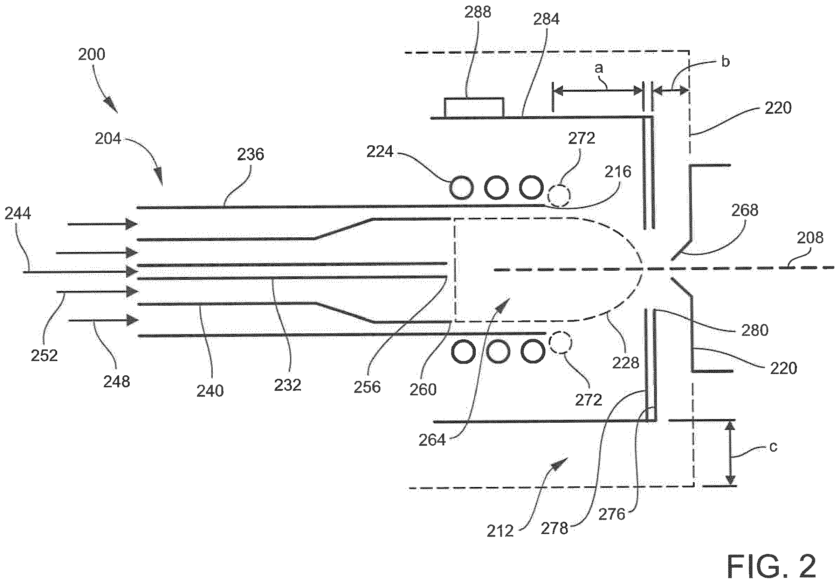

Figure 2 is a schematic cross-sectional view of an example of a plasma source 200 according to some embodiments of the present disclosure. In this example, the plasma source 200 is based on a concentric tube, or plasma torch, configuration. Thus, the plasma source 200 includes a plasma torch 204 extending along a torch axis 208 into an enclosed torch chamber 212 defined by one or more chamber walls defining the boundaries of the interior of the torch chamber 212. The plasma torch 204 terminates at a torch exit (or plasma exit) 216 in the torch chamber 212 that is coaxial with the torch axis 208. At least one chamber wall or boundary 220 is positioned axially opposite the torch exit 216, i.e., is positioned at an axial distance downstream from the torch exit 216. The plasma source 200 also includes an energy source 224 configured for generating and sustaining plasma 228. With the plasma torch configuration, the plasma 228 is discharged from the torch exit 216 as a plume extending or flowing generally along the torch axis 208 toward the chamber wall 220.

In typical embodiments, the torch chamber 212 is at, around or slightly below atmospheric pressure during operation. In the present context, "at" atmospheric pressure encompasses "at or around" atmospheric pressure, i.e., the term "atmospheric pressure" is not limited to the standard atmospheric pressure of 101325 Pa (760 Torr). As one non-limiting example, a pressure that is at (or around) atmospheric pressure may be on the order of 10⁵ Pa (hundreds of Torr). Also in the present context, "below" atmospheric pressure encompasses pressures less than 101325 Pa (760 Torr).

The plasma may be generated and sustained by various known techniques. As examples, the energy source 224 may include electrodes coupled to a direct current (DC), alternating current (AC) or radio frequency (RF) voltage source, and may further include one or more dielectric barriers, resonant cavities, microstrips, and/or magnets. Accordingly the plasma may be, for example, a DC or AC glow discharge, corona discharge, RF capacitive or inductive discharge, dielectric barrier discharge (DBD), or microwave discharge. In typical embodiments, the plasma is inductively coupled plasma (ICP) or microwave induced plasma (MIP). In the case of ICP, the energy source 224 may include an RF power source coupled to a work coil surrounding a portion of the plasma torch 204, as schematically illustrated by example in Figure 2. The work coil applies RF energy (e.g., 10 to 100 MHz) to a plasma-forming gas flowing through the plasma torch 204. In the case of MIP, the energy source 224 may include a power source coupled to an appropriate assembly of electrodes, magnets and resonant structures (e.g., a magnetron) to apply microwave energy (e.g., several GHz) to the plasma-forming gas. The plasma-forming gas may be a single gas species or a combination or two or more different species. In typical embodiments, the plasma-forming gas is argon or nitrogen. More generally, examples of plasma-forming gases include, but are not limited to, a noble gas (helium, neon, argon, krypton, or xenon), a non-noble gas (e.g., hydrogen, helium, nitrogen, oxygen, water vapor, or a halogen such as fluorine, chlorine or bromine), a combination of two or more noble gases, or a combination of a non-noble gas with one or more noble gases. Various types of plasmas, and the design and operating principles of various types of energy sources utilized to generate plasmas, are generally known to persons skilled in the art and thus for purposes of the present disclosure need not be described further.

The plasma torch 204 may include a plurality of coaxial tubes that define a plurality of flow paths in direction along or parallel to (coaxial with) the torch axis 208. The tubes may include a central tube and one or more concentric outer tubes defining annular conduits. In a typical embodiment, a sample material in the form of an aerosol (i.e., a spray or fine mist of small droplets in a carrier gas) flows through the central tube and a plasma-forming gas flows through a surrounding annular conduit. The energy transfer component of the energy source 224 is positioned relative to the plasma torch 204 such that plasma is generated from the plasma-forming gas in the plasma torch 204. The outlets of the central tube and annular conduit are positioned such that the sample aerosol is injected into the plasma. Alternatively, the sample material may be introduced into the plasma torch in a gaseous phase that does not necessarily include aerosol particles. As one example, the sample may be eluted from a gas chromatograph column. Thus, references to "aerosol" herein may also encompass a gas or gas mixture, unless otherwise specified or the context dictates otherwise.

In the illustrated embodiment, the plasma torch 204 includes a first (central) tube 232 positioned on the torch axis 208, a second (outer) tube 236 coaxially surrounding the first tube 232, and a third (middle) tube 240 coaxially surrounding the first tube 232 between the first tube 232 and the second tube 236 (i.e., the second tube 236 surrounds the third tube 240). Thus, a first annular conduit is formed between the first tube 232 and the third tube 240, and a second annular conduit is formed between the second tube 236 and the third tube 240. Torch inlets 244, 248 and 252 (schematically depicted by arrows) communicate with the first tube 232, second tube 236, and third tube 240, respectively. One or more of the torch inlets 244, 248, and 252 may be side ports in the tube walls. One or more inlets, such as 248 and 252, may be configured in a fashion such as to impart significant angular momentum or swirl to the gas around the axis of the torch 204; one common configuration is a so-called "sidearm" inlet in which inlets are azimuthally tangent to the body of the torch 204. Generally, the sample aerosol and gases may be directed through any of the tubes. In a typical embodiment, the sample aerosol flows through the first tube 232 (such that the torch inlet 244 is a sample inlet), the plasma-forming gas flows through the second annular conduit between the second tube 236 and the third tube 240 (such that the torch inlet 248 is a plasma-forming gas inlet), and an auxiliary gas flows through the first annular conduit between the first tube 232 and the third tube 240 (such that the torch inlet 252 is an auxiliary gas inlet). The axial positions of respective outlets of the tubes 232, 236 and 240 may be the same or different.

In some embodiments, as illustrated, the second tube 236 is extended relative to the first tube 232 and third tube 240 such that the outlet of the second tube 236 is the torch exit 216, and respective outlets 256 and 260 of the first tube 232 and third tube 240 (and thus the first and second annular conduits) terminate at axial positions inside the second tube 236 (i.e., axially upstream of the torch exit 216). By this configuration, the distal, i.e. downstream, end section of the second tube 236 coaxially surrounds a sample-plasma interaction region 264 into which the sample aerosol, plasma-forming gas, and auxiliary gas flow. The energy transfer component of the energy source 224 may be positioned proximate or adjacent to the interaction region 264, such that a majority of the plasma 228 is generated in the interaction region 264 and the sample aerosol is injected into a central region of the plasma 228, which may be a relatively cold or hollow (low-ionization) region of the plasma 228. The axially upstream positions of the first tube outlet 256 and third tube outlet 260 may be useful for avoiding contact with the hot plasma 228. The optional auxiliary gas may be supplied concentrically between the sample aerosol and the plasma-forming gas for a purpose such as maintaining a desired gas-plasma flow rate from the torch exit 216, radially confining or controlling the shape of the plasma plume, and/or keeping the hot plasma 228 away from surfaces of the plasma torch 204.

In some embodiments, the plasma is discharged into interaction region 264 at a flow rate in a range from 5 to 25 standard liters per minute.

The carrier gas of the sample aerosol and the auxiliary gas may be any gas inert to and compatible with the processes implemented by the plasma source 200, such as argon, nitrogen, etc. In some embodiments, the carrier gas and the auxiliary gas may have the same composition, or one or both or the carrier gas and the auxiliary gas may have the same composition as the plasma-forming gas.

In other embodiments, an auxiliary gas may not be utilized such that the intermediate third tube 240 may not be provided. In other embodiments, the plasma torch 204 may be configured such that the sample aerosol is injected into the plasma 228 at an angle to the torch axis 208 and/or offset radially from its axis 208.

The plasma source 200 may utilized to produce atoms of the sample material in preparation for analysis by the analytical instrument. As noted above the analytical instrument may, for example, be a spectrometer such as an OES or an MS. The chamber wall 220 may therefore be configured to be, or be part of, a boundary or interface between the plasma source 200 and the analytical instrument. The chamber wall 220 may include, or provide mounting support for, an optics component 268, which may be a photon optics component or an ion optics component. Figure 2 illustrates an example of a case where the analytical instrument is an MS. In this case, the chamber wall 220 may include a conical plate termed a sampling cone that has a small aperture on the torch axis 208. The sampling cone may be part of the ion optics of the MS functioning to extract plasma to form an ion beam from the torch chamber 212, through the sampling cone aperture, and into the MS interior. The sampling cone also serves as a gas conductance barrier between the torch chamber 212 and the low-pressure/vacuum stages of the MS. In an alternative case where the analytical instrument is an OES, the chamber wall 220 may include a photon optics component such as a window or lens instead of an ion optics component. The chamber wall 220 may also include a conductance-limiting orifice for exhausting gases, which may be shaped similar to a sampling cone. The structural configuration and operation of plasma-based OES and MS systems are understood by persons skilled in the art.

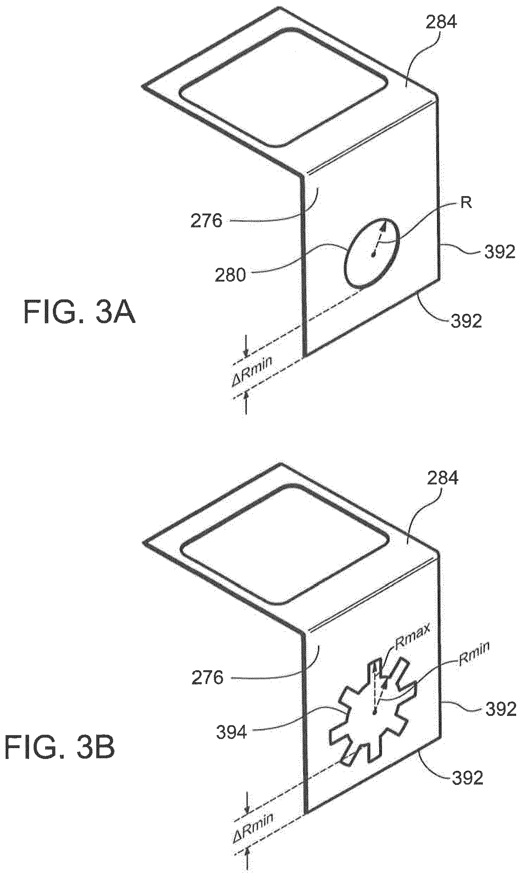

Figure 2 schematically depicts the initial evolution of an annular vortex 272 at the torch exit 216. In a conventional plasma source, such vortices inevitably form due to the velocity mismatch between the plasma 228 and the ambient gas in the chamber 212. This velocity mismatch creates a cylindrical vortex sheet which is unstable to the formation of discrete annular vortices. In a process known as vortex shedding, such vortices transiently form and then are advected downstream, allowing another vortex to form, often in a time-periodic manner. The attendant problems of vortex shedding are described earlier in this disclosure. To eliminate (or substantially eliminate) vortex shedding, the plasma source 200 may include a baffle (or plate) 276 positioned axially between the torch exit 216 and the chamber wall 220. The baffle 276 according to this example is also shown in perspective view in Figure 3A. In some embodiments, the baffle 276 or at least one section thereof may be orthogonal to the torch axis 208, although other orientations of the baffle 276 may also be effective. The baffle 276 may be generally flat or may include some curvature. The baffle 276 has an inner edge defining an aperture 280, and is positioned such that the torch axis 208 passes through the aperture 280. As illustrated, the aperture 280 may be centered on the torch axis 208. The aperture 280 enables the plasma source 200 to maintain a path for photons or ions or plasma gas from the plasma 228 to the photon or ion optics component 268 of the chamber wall 220. The aperture 280 may be sized large enough to avoid contact with the hot, partially ionized portion of the plasma plume.

The baffle 276 may be composed of any suitable high-temperature material, i.e., a material capable of withstanding high temperatures repeatedly and without failure over an acceptable number of operating cycles of the plasma source 200. Examples of suitable high-temperature materials include, but are not limited to, high-temperature metals, high-temperature alloys, and high-temperature ceramics. In a specific example, the baffle 276 may be composed of a high-temperature nickel alloy, such as from the family of HASTALLOY® alloys (Haynes International Inc., Kokomo, Indiana, USA).

In some embodiments, two or more baffles may be provided. As one example, Figure 2 illustrates a second baffle 278 axially displaced from the first baffle 276.

According to the present teachings, in a given plasma source there is an optimal axial position between the torch exit 216 and the chamber wall 220 at which the baffle 276 effectively suppresses or prevents annular vortex shedding. Moreover, in a given plasma source there may be a range of tolerance around the optimal axial position in which the baffle 276 may be located and serve this role effectively, i.e., there may be an optimal range for the axial position of the baffle 276. Figure 2 shows an axial distance *a* between the torch exit 216 and the baffle 276, and an axial distance *b* between the baffle 276 and the chamber wall 220. It has been found that the optimal axial position of the baffle 276 depends more on distance *b* than distance *a.* According to the invention, the baffle 276 is positioned at an axial distance *b* from the chamber wall 220 effective for suppressing annular vortex shedding in the discharged plasma. This optimum axial distance *b* may vary within a small range. The distance between the torch exit 216 and the chamber wall 220, i.e., the sum of distance *a,* the thickness of the baffle 276, and distance *b,* falls within the sampling depth range of an Agilent 7500ce ICP-MS instrument (of which Figure 2 is representative) during normal operation, and may be expected to fall within sampling depth range of other plasma-torch equipped instruments as well.

As shown in Figure 3A, the baffle aperture 280 has a radius R from its center to the inner edge of the baffle 276 that defines the perimeter of the baffle aperture 280. In addition to the optimum axial distance *b* described above, there may be an optimal radius, or range of radii, of the baffle aperture 280 that is particularly effective for suppressing annular vortex shedding. In some embodiments, the radius of the baffle aperture 280 may be substantially equal to the radius of the torch exit 216 (Figure 2). In the present context, "substantially" equal encompasses a tolerance of ±10%, i.e., in such embodiments the radius of the baffle aperture 280 is in a range of ±10% of the radius of the torch exit 216. In addition, it has also been found that the effectiveness of suppression of annular vortex shedding may depend on the ratio Δ*Rₘᵢₙ*/*a,* where Δ*Rₘᵢₙ* is the minimum radial distance between the edge of the baffle aperture 280 and the outer edge 392 of the baffle 276, and *a* is the axial distance between the torch exit 216 and the baffle 276 as described above. In the illustrated embodiment, Δ*Rₘᵢₙ* occurs along a radial line between the edge of the baffle aperture 280 and the bottom outer edge, although in other embodiments Δ*Rₘᵢₙ* may occur at another angular position, depending on the geometry of the baffle 276 (e.g., the position of the baffle aperture 280 relative to the solid portion of the baffle 276, the shape of the solid portion of the baffle 276, etc.). In some embodiments, the optimal ratio Δ*Rₘᵢₙ*/*a* is equal to about 2/5 (0.4) or greater. Alternatively or additionally, the distance Δ*Rₘᵢₙ* is equal to about (0.25)*R* (i.e., *R*/4) or greater.

Figure 3B is a schematic perspective view of another example of the baffle 276 according to some embodiments. In this example, the baffle 276 has a "crowned" aperture 394, which is a composite of a circular hole of radius *Rₘᵢₙ* and a plurality of radial slots extending radially outward from the center of the crowned aperture 394 to a maximum radius *Rₘₐₓ.* The radial slots may be polygonal, e.g., rectangular as in the illustrated embodiment, or in the shape of some other type of polygon such as a triangle. The criterion described above, regarding the radius of the baffle aperture 280 shown in Figure 3A being substantially equal to the radius of the torch exit 216 (Figure 2), may be applied to the crowned aperture 394 shown in Figure 3B based on the radius of the circular portion of the crowned aperture 394. That is, in some embodiments, the radius *Rₘᵢₙ* of the circular portion of the crowned aperture 394 may be substantially equal to the radius of the torch exit 216. Also, in considering the ratio Δ*Rₘᵢₙ*/*a* in conjunction with the crowned aperture 394, Δ*Rₘᵢₙ* is the minimum radial distance between the edge of the circular portion of the crowned aperture 394 and the outer edge 392 of the baffle 276. Alternatively or additionally, the distance Δ*Rₘᵢₙ* is equal to about (0.25)*Rₘᵢₙ* (i.e., *Rₘᵢₙ*/*4)* or greater.

Generally, the baffle 276 may be mounted (fixed in position) in the torch chamber 212 by any suitable means. As shown in Figures 2, 3A and 3B, the baffle 276 may be attached to or integral with a mounting structure 284. The mounting structure 284 may in turn be attached to a wall of the torch chamber 212 or to another structure of the plasma source 200. In some embodiments, the plasma source 200 may include an adjustment device 288 configured for enabling selective adjustment of the axial position of the baffle 276 and, consequently, the axial distance between the baffle 276 and the chamber wall 220 (distance *b* in Figure 2). The adjustment device 288 may be mechanically coupled to the baffle 276 or, if provided, to the mounting structure 284. The baffle 276 (or baffle 276 and mounting structure 284) may be selectively movable by the adjustment device 288, or the adjustment device 288 may be configured for alternatively locking and unlocking the baffle 276 or mounting structure 284 at different axial positions. For example, the adjustment device 288 may enable the baffle 276 or mounting structure 284 to slide relative to the adjustment device 288 to a desired axial position, and then clamp or otherwise lock the baffle 276 or mounting structure 284 in place at that axial position. Hence, the adjustment device 288 may facilitate positioning the baffle 276 at an axial distance from the chamber wall 220 effective for suppressing annular vortex shedding in the discharged plasma. The adjustment device 288 is schematically illustrated as being located in the torch chamber 212, but all or part of the adjustment device 288 may be located outside the torch chamber 212.

In some embodiments, as illustrated, the baffle 276 does not span the entire cross-sectional area of the torch chamber 212 in the sampling depth region (between the torch exit 216 and the chamber wall 220. Stated differently, the cross-sectional area of the baffle 276 is smaller than that of the torch chamber 212 in the sampling depth region. In such embodiments, the baffle 276 may be mounted or suspended in the torch chamber 212 by the mounting structure 284 such that one or more radial gaps exist between the outer edge(s) of the baffle 276 and the inside surfaces (walls) of the torch chamber 212. For example, Figure 2 shows the baffle 276 spaced from the inside surfaces of the torch chamber 212 along radial directions, one radial distance or gap c being specifically shown between the baffle 276 and the bottom inside surface of the torch chamber 212.

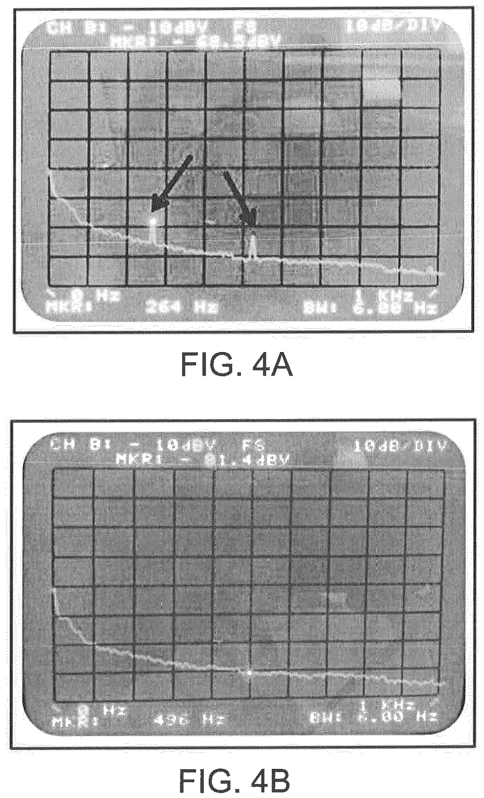

Figures 4A and 4B are photographs of a screen display of a noise power spectrum (signal intensity (log base 10 scale) as a function of frequency (Hz)) as acquired by the electron multiplier (EM) detector of an ICP-MS instrument while operating without the baffle 276 (Figure 4A) and with the baffle 276 (Figure 4B) illustrated in Figures 2 and 3. The instrument was the Agilent 7500ce ICP-MS referred to above, configured for measuring a trace amount of the erbium ion (Er+, m/z = 166) in solution. As in the evaluation described above in conjunction with Figure 1, the analog signal from the EM detector was amplified using a current-to-voltage amplifier and analyzed in the frequency domain using a frequency spectrum analyzer. The two arrows in Figure 4A indicate noise peaks associated with annular vortex shedding. As shown in Figure 4B, the addition and proper positioning of the baffle 276 completely removed these peaks, thereby lowering the overall detector noise. The system operated normally with the baffle 276 in place for six hours, and all indications were that the system would continue to do so for many more hours.

Under standard instrument operating conditions, the presence of the baffle 276 did not positively or negatively affect the detection limit for the test species (erbium ion), as shown by the TABLE below, because the standard detector sampling time of 100 milliseconds (ms) is slow on the single millisecond timescale of vortex shedding. However, in applications requiring faster acquisition rates (e.g., less than 10 ms), such as time-of-flight mass spectrometry (TOF-MS) or the analysis of transient species such as nanoparticles, the use of the baffle may be expected to have a positive impact on system performance.

In the TABLE below, "ppt" refers to parts per trillion and "cps" refers to counts per second (the raw data acquired by the ion detector).

**TABLE**

| ¹⁶⁶Er detection limits | **Er 166 ppt** | **Er 166 cps** |
|---|---|---|
| Baffle avg (n=4) | 1.455962482 | 12.70313651 |
| Baffle stdv (n=4) | 0.277921958 | 2.780165366 |
| | | |
| No Baffle avg (n=4) | 1.620150701 | 12.62352418 |
| No Baffle stdv (n=4) | 0.383471332 | 2.875045517 |

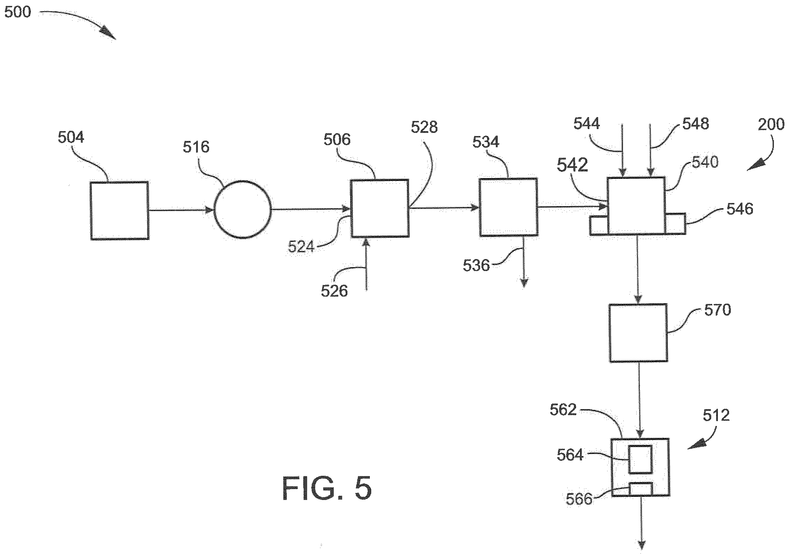

Figure 5 is a schematic view of an example of a sample analysis system 500 according to some embodiments. The sample analysis system 500 generally includes a plasma source 200 as described herein and an analytical instrument 512. Generally, the plasma source 200 generates plasma and flows sample material (typically in the form of an aerosol, or spray) into the plasma to break sample molecules into atoms. The analytical instrument 512 then acquires measurement data from the atoms which, depending on its operating principle, may entail interacting with the sample atoms, with energy emitted from the sample atoms, or with ions derived from the sample atoms.

The sample analysis system 500 may also include a sample source 504 and a nebulizer 506. The sample source 504 may be any device or system for supplying a sample to be analyzed to the nebulizer 506. A suitable pump (e.g., peristaltic pump, syringe, etc.) may be utilized to establish a flow of liquid sample into the nebulizer 506. Alternatively, the sample source 504 may be or include a pressurized reservoir containing the liquid sample. In some embodiments, the source may be the output of a liquid chromatography (LC) instrument.

The nebulizer 506 is configured for receiving a flow of liquid sample from the sample source 504 and converting the liquid sample into an aerosol, after which the sample aerosol flows to the plasma source 200. The nebulizer 506 includes a liquid sample inlet 524 communicating with the fluid line from the sample source 504 or from any pump 516 that may be provided between the sample source 504 and the nebulizer 506. The nebulizer 506 is often of the pneumatically assisted type, in which case the nebulizer 506 also includes a gas inlet 526 communicating with a gas source. The nebulizing gas (or carrier gas) may be any inert gas suitable for nebulizing the liquid sample and compatible with the operation of the plasma source 200. Examples include, but are not limited to, argon, nitrogen, helium, hydrogen, oxygen, water, and others noted above. In some embodiments, the nebulizing gas flows in a tube coaxially surrounding the tube in which the liquid sample flows. The liquid sample exits an orifice as a stream that is enveloped by the surrounding gas flow, and is broken into small droplets according to known fluid mechanics. The resulting sample aerosol exits through a nebulizer outlet (exit) 528.

The nebulizer 506 may communicate directly with the plasma source 200 via a fluid line and fittings. Alternatively, the sample analysis system 500 may include a spray chamber 534 fluidly intercoupled between the nebulizer 506 and the plasma source 200. As appreciated by persons skilled in the art, the spray chamber 534 may be configured for removing larger (coarse) droplets from the sample aerosol whereby only fine droplets are introduced into the plasma source 200. For this purpose, the spray chamber 534 may include a housing enclosing a chamber interior. The spray chamber 534 may further include one or more internal structures (e.g., baffle, cylinder, etc.), which may be positioned such that the in-flowing larger droplets due to their greater momentum impinge on the internal structures while the smaller droplets avoid the internal structures. Larger droplets tend to adhere to the internal surfaces (e.g., inside surface of the housing, internal structures) of the spray chamber 534 and may be removed via a drain 536, while fine droplets remain entrained in the gas flow and are transmitted to the plasma source 200. No specific limitation is placed on the size range of "fine" droplets. As one non-limiting example, the size (diameter) of "fine" droplets may be on the order of a few (1-10) micrometers (µm).

As described above, the plasma source 200 is configured for generating plasma, receiving a flow of sample aerosol (such as from the nebulizer 506 or intervening spray chamber 534, if provided), and injecting the sample aerosol into the as-generated plasma, whereby the sample molecules of the aerosol are excited by the energized species of the plasma (electrons, plasma ions, etc.) and fragmented into atoms. The plasma source 200 generally may include a housing 540 enclosing a plasma source interior, a sample inlet 542 for conducting the aerosol into the interior, a plasma-forming gas inlet 544 for conducting a plasma-forming gas into the interior, and an energy source 546 for generating plasma in the interior. The plasma source 200 may have a torch or concentric tube configuration according to any of the embodiments disclosed herein. Optionally, the plasma source 200 may include an auxiliary gas inlet 548 for introducing an auxiliary gas as described above in conjunction with Figure 2.

Generally, the analytical instrument 512 may be any instrument suitable for acquiring data from the sample atoms produced by the plasma source 200, such as for identifying the sample atoms, measuring the concentration (or abundance) of the sample atoms in the sample, etc. The analytical instrument 512 may be configured to measure (or detect) an attribute of the sample atoms. In some embodiments, the analytical instrument 512 may be a spectrometer that measures a spectral attribute. In a typical embodiment, the spectrometer includes housing 562 enclosing an analyzer 564 and a detector 566. Depending on the type of analytical instrument 512 provided, the sample analysis system 500 may include an interface 570 between the plasma source 200 and the analytical instrument 512. The interface 570 may include a gas conductance barrier, as well as photon optics (e.g., window, lenses, etc.) or ion optics (e.g., lenses, multipole electrode sets, etc.) as described above in conjunction with Figure 2. In some embodiments, the chamber wall 220 described above in conjunction with Figure 2 may be considered as being part of the interface 570.

In some embodiments, the sample analysis system 500 may be an optical emission spectrometry (OES) system (also termed an atomic emission spectrometer (AES) system). Thus, the analytical instrument 512 may be an optical emission spectrometer (OES (or atomic emission spectrometer (AES)). As appreciated by persons skilled in the art, an OES is configured for receiving photons emitted from the sample atoms as they relax from their excited states (induced by the plasma), resolving the photons on the basis of their respective wavelengths, and measuring the light intensity (abundance) at each wavelength. In the case of OES, the interface 570 may be or include photon optics for collecting the light generated in the plasma source 200 and transmitting the light as a focused beam to the analyzer 564. The analyzer 564 may be, for example, an optical analyzer such as a diffraction grating or other device configured for spectrally resolving the different wavelengths of the ensemble of photons comprising the light beam. The detector 566 may be a suitable optical detector (photodetector) such as, for example, one or more photomultiplier tubes (PMTs), photodiodes, charge coupled devices (CCDs), etc.

In other embodiments, the sample analysis system 500 may be a mass spectrometry (MS) system. Thus, the analytical instrument 512 may be a mass spectrometer (MS). As appreciated by persons skilled in the art, an MS is configured for receiving sample ions (sample atoms ionized by the plasma), resolving the sample ions on the basis of their respective mass-to-charge (m/z) ratios, and measuring the ion abundance (counting the ions) of each m/z ratio detected. In the case of MS, the interface 570 may be or include ion optics configured for extracting the sample ions from the plasma source 200 and transmitting them as a focused beam to the analyzer 564. The ion optics may be enclosed in one or more pump-down stages configured for lowering the pressure down to the very low pressure (high vacuum) level of the analyzer 564. The analyzer 564 in the case of MS is a mass analyzer. The structure and operation of various types of mass analyzers are known to persons skilled in the art. Examples of mass analyzers include, but are not limited to, multipole electrode structures (e.g., quadrupole mass filters, linear ion traps, three-dimensional Paul traps, etc.), time-of-flight (TOF) analyzers, electrostatic traps (e.g. Kingdon, Knight and ORBITRAP® traps) and ion cyclotron resonance (ICR) traps (FT-ICR or FTMS, also known as Penning traps). The detector 566 may be any device configured for collecting and measuring the flux (or current) of mass-discriminated ions outputted from the analyzer 564. Examples of ion detectors 566 include, but are not limited to, image current detectors, electron multipliers, photomultipliers, Faraday cups, and micro-channel plate (MCP) detectors.

The sample analysis system 500 may further include a system controller (not shown). The system controller may include one or more modules configured for controlling, monitoring and/or timing various functional aspects of the sample analysis system 500 such as, for example, controlling the operations of the sample source 504, the plasma source 200, and the analytical instrument 512, as well as controlling various gas flow rates, temperature and pressure conditions, and any other sample processing components provided between the illustrated devices. The system controller may also be configured for receiving the detection signals from the detector 566 and performing other tasks relating to data acquisition and signal analysis as necessary to generate data (e.g., an atomic emission line spectrum, a mass spectrum, etc.) characterizing the sample under analysis. The system controller may include a computer-readable medium that includes instructions for performing any of the methods disclosed herein. The system controller may include one or more types of hardware, firmware and/or software, as well as one or more memories and databases, as needed for operating the various components of the sample analysis system 500. The system controller typically includes a main electronic processor providing overall control, and may include one or more electronic processors configured for dedicated control operations or specific signal processing tasks. The system controller may also include one or more types of user interface devices, such as user input devices (e.g., keypad, touch screen, mouse, and the like), user output devices (e.g., display screen, printer, visual indicators or alerts, audible indicators or alerts, and the like), a graphical user interface (GUI) controlled by software, and devices for loading media readable by the electronic processor (e.g., logic instructions embodied in software, data, and the like). The system controller may include an operating system (e.g., Microsoft Windows® software) for controlling and managing various functions of the system controller.

It will be understood that Figure 5 is a high-level schematic depiction of the sample analysis system 500 disclosed herein. As appreciated by persons skilled in the art, other components such as additional structures, devices, and electronics may be included as needed for practical implementations, depending on how the sample analysis system 500 is configured for a given application.

As may be seen from the foregoing description, embodiments disclosed herein may eliminate or substantially eliminate annular vortex shedding without requiring any change in torch length or configuration or in torch-to-detector distance, and therefore may be utilized in both plasma-based OES and MS. The elimination of vortex shedding removes the audio frequency tones, and thus the overall noise observed at the MS detector is reduced. Moreover, the entrainment of ambient gas into the plasma is attenuated due to the absence of the vortex shedding phenomenon, thereby reducing the concentration in the plasma of undesirable species of the ambient gas. Furthermore, the prevention of the audio tones renders the OES or MS instrument audibly quieter, resulting in less audio load on the instrument operator.

### EXEMPLARY EMBODIMENTS

Exemplary embodiments useful for the understanding of the present invention and provided in accordance with the presently disclosed subject matter include, but are not limited to, the following:
1. A method for producing sample atoms, comprising: generating plasma in a plasma torch comprising a torch exit coaxial with a torch axis; discharging the plasma from the torch exit into a chamber along the torch axis, through an aperture of a baffle in the chamber, and toward a chamber wall that at least partially defines the chamber, wherein the baffle is positioned at an axial distance from the chamber wall effective for suppressing annular vortex shedding in the discharged plasma; and injecting a sample into the plasma.
2. The method of embodiment 1, wherein generating plasma comprises generating inductively coupled plasma or microwave induced plasma.
3. The method of any of the preceding embodiments, wherein generating plasma comprises flowing into the plasma torch a plasma-forming gas selected from the group consisting of a noble gas, nitrogen, a mixture of two or more noble gases, and a mixture of one or more noble gases and one or more non-noble gases.
4. The method of any of the preceding embodiments, comprising flowing the sample into the plasma torch from a nebulizer or a spray chamber.
5. The method of any of the preceding embodiments, wherein the plasma torch comprises a first tube and a second tube coaxially surrounding the first tube such that an annular conduit is defined between the first tube and the second tube, and wherein discharging the plasma comprises flowing the plasma through the annular conduit, and injecting the sample comprises flowing the sample through the first tube.
6. The method of any of the preceding embodiments, wherein: the plasma torch comprises a first tube, a second tube coaxially surrounding the first tube, and a third tube coaxially positioned between the first tube and the second tube, such that a first annular conduit is defined between the first tube and the third tube and a second annular conduit is defined between the second tube and the third tube; discharging the plasma comprises flowing a plasma-forming gas through the first annular conduit or the second annular conduit, and injecting the sample comprises flowing the sample through the first tube, and further comprising: discharging an auxiliary gas into the chamber from the first annular conduit or the second annular conduit.
7. The method of any of the preceding embodiments, comprising moving the baffle along the torch axis to adjust the axial distance of the baffle from the chamber wall.
8. The method of any of the preceding embodiments, wherein the aperture is circular or at least includes a circular portion, and further comprising positioning the baffle such that a ratio Δ*Rₘᵢₙ*/*a* is about 0.4 or greater, or Δ*Rₘᵢₙ* is equal to about (0.25)*R* or greater, or both of the foregoing conditions, wherein Δ*Rₘᵢₙ* is a minimum radial distance between an edge of the aperture or the circular portion thereof and an outer edge of the baffle, *a* is an axial distance between the torch exit and the baffle, and *R* is the radius of the aperture of the circular portion thereof.
9. The method of any of the preceding embodiments, wherein the aperture is circular or at least includes a circular portion, and the aperture or the circular portion has a radius substantially the same as a radius of the torch exit.
10. A method for analyzing a liquid sample, comprising: producing sample atoms according to the method of any of the preceding embodiments; and measuring an attribute of the sample atoms.
11. The method of embodiment 10, wherein measuring an attribute of the sample atoms is selected from the group consisting of: measuring a spectral attribute of the sample atoms; measuring photons emitted from the sample atoms; directing photons emitted from the sample atoms into an optical emission spectrometer, and spectrally resolving photons emitted from the sample atoms according to wavelength; producing ions from the sample atoms, and measuring the ions; and producing ions from the sample atoms, directing the ions into a mass spectrometer, and spectrally resolving the ions according to mass-to-charge ratio.
12. A plasma source, comprising: a chamber comprising a chamber wall; a plasma torch comprising a sample inlet, a plasma-forming gas inlet, and a torch exit, wherein the torch exit is coaxial with a torch axis; an energy source configured for generating plasma in the plasma torch; and a baffle between the torch exit and the chamber wall, wherein the baffle comprises an aperture through which the torch axis passes, and the baffle is positioned at an axial distance from the chamber wall effective for suppressing annular vortex shedding in plasma discharged from the torch exit.
13. The plasma source of embodiment 12, comprising a mounting structure to which the baffle is affixed.
14. The plasma source of embodiment 13, wherein the mounting structure comprises an adjustment device configured for enabling selective adjustment of the axial distance between the baffle and the chamber wall.
15. The plasma source of any of embodiments 12 to 14, wherein the aperture is circular or at least includes a circular portion, and the baffle comprises an outer edge and is positioned or sized such that a ratio Δ*Rₘᵢₙ*/*a* is about 0.4 or greater, or Δ*Rₘᵢₙ* is equal to about (0.25)*R* or greater, or both of the foregoing conditions, wherein Δ*Rₘᵢₙ* is a minimum radial distance between an edge of the aperture or the circular portion thereof and the outer edge of the baffle, *a* is an axial distance between the torch exit and the baffle, and R is the radius of the aperture of the circular portion thereof.
16. The plasma source of any of embodiments 12 to 15, wherein the aperture is circular or at least includes a circular portion, and the aperture or the circular portion has a radius substantially the same as a radius of the torch exit.
17. The plasma source of any of embodiments 12 to 16, wherein the baffle is composed of a material selected from the group consisting of a high-temperature metal, a high-temperature alloy, a high-temperature nickel alloy, and a high-temperature ceramic.
18. The plasma source of any of embodiments 12 to 17, wherein the baffle is orthogonal to the torch axis.
19. The plasma source of any of embodiments 12 to 18, wherein the baffle has a cross-sectional area of smaller than a cross-sectional area of the chamber in a region between the torch exit and the chamber wall.
20. The plasma source of any of embodiments 12 to 19, wherein the chamber comprises an inside surface, and the baffle comprises an outer edge spaced from the inside surface along a radial direction.
21. The plasma source of any of embodiments 12 to 20, wherein the plasma torch has a configuration comprising at least one of: the plasma torch comprises a first tube and a second tube coaxially surrounding the first tube such that an annular conduit is defined between the first tube and the second tube, wherein the sample inlet communicates with the first tube and the plasma-forming gas inlet communicates with the annular conduit; the plasma torch comprises an auxiliary gas inlet, a first tube, a second tube coaxially surrounding the first tube, and a third tube coaxially positioned between the first tube and the second tube, such that a first annular conduit is defined between the first tube and the third tube and a second annular conduit is defined between the second tube and the third tube, wherein the sample inlet communicates with the first tube, the plasma-forming gas inlet communicates with the first annular conduit or the second annular conduit, and the auxiliary gas inlet communicates with the first annular conduit or the second annular conduit.
22. The plasma source of any of embodiments 12 to 21, wherein the plasma torch comprises: a first tube communicating with the sample inlet and comprising a sample outlet; a second tube coaxially surrounding the first tube and terminating at the torch exit, the second tube forming an annular conduit communicating with the plasma-forming gas inlet; and an interaction region surrounded by the second plasma source tube and communicating with the sample outlet and the annular conduit.
23. The plasma source of any of embodiments 12 to 22, wherein the energy source is configured for generating inductively coupled plasma or microwave induced plasma.
24. The plasma source of any of embodiments 12 to 23, wherein the chamber wall comprises a photon optics component or an ion optics component.
25. A sample analysis system, comprising: the plasma source of any of embodiments 12 to 24; and an analytical instrument configured to acquire data from sample atoms produced by the plasma source.
26. The sample analysis system of embodiment 25, wherein the analytical instrument is selected from the group consisting of: a spectrometer; a mass spectrometer communicating with the plasma source; and an optical emission spectrometer communicating with the plasma source.
27. A mass spectrometry (MS) system, comprising: the plasma source of any of embodiments 12 to 24; and a mass analyzer configured for receiving ions produced by the plasma source.
28. The MS system of embodiment 27, comprising ion optics between the plasma source and the mass analyzer.
29. The MS system of embodiment 27 or 28, comprising an ion detector communicating with the mass analyzer.
30. An optical emission spectrometry (OES) system, comprising: the plasma source of any of embodiments 12 to 24; and an optical analyzer configured for receiving photons emitted by atoms produced by the plasma source.
31. The OES system of embodiment 30, comprising photon optics between the plasma source and the optical analyzer.
32. The OES system of embodiment 30 or 31, comprising an optical detector communicating with the optical analyzer.

It will be understood that terms such as "communicate" and "in ... communication with" (for example, a first component "communicates with" or "is in communication with" a second component) are used herein to indicate a structural, functional, mechanical, electrical, signal, optical, magnetic, electromagnetic, ionic or fluidic relationship between two or more components or elements. As such, the fact that one component is said to communicate with a second component is not intended to exclude the possibility that additional components may be present between, and/or operatively associated or engaged with, the first and second components.

It will be understood that various aspects or details of the invention may be changed without departing from the scope of the invention. Furthermore, the foregoing description is for the purpose of illustration only, and not for the purpose of limitation-the invention being defined by the claims.

## Claims

1. A method for producing sample atoms, comprising:
generating plasma (228) in a plasma torch (204) comprising a torch exit (216) coaxial with a torch axis (208);
discharging the plasma (228) from the torch exit (216) into a chamber (212) along the torch axis (208), through an aperture (280; 394) of a baffle (276) in the chamber (212), and toward a chamber wall (220) that at least partially defines the chamber (212), wherein the baffle (276) is positioned at an axial distance (b) from the chamber wall (220) effective for suppressing annular vortex shedding in the discharged plasma (228); and
injecting a sample into the plasma (228) to produce said sample atoms, **characterized by**
selecting the axial distance (b) of the baffle (276) from the chamber wall (220) such that a noise peak in a noise power spectrum associated with the annular vortex shedding is removed.

2. A method for analyzing a liquid sample, comprising:
producing sample atoms according to the method of claim 1; and
measuring an attribute of the sample atoms.

3. The method of claim 2, wherein measuring an attribute of the sample atoms is selected from the group consisting of:
measuring a spectral attribute of the sample atoms;
measuring photons emitted from the sample atoms;
directing photons emitted from the sample atoms into an optical emission spectrometer (512), and spectrally resolving the photons according to wavelength;
producing ions from the sample atoms, and measuring the ions; and
producing ions from the sample atoms, directing the ions into a mass spectrometer (512), and spectrally resolving the ions according to mass-to-charge ratio.

4. A plasma source (200), comprising:
a chamber (212) comprising a chamber wall (220);
a plasma torch (204) comprising a sample inlet (244; 542), a plasma-forming gas inlet (248; 544), and a torch exit (216), wherein the torch exit (216) is coaxial with a torch axis (208);
an energy source (224; 546) configured for generating plasma (228) in the plasma torch (204); and
a baffle (276) between the torch exit (216) and the chamber wall (220), wherein the baffle (276) comprises an aperture (280; 394) through which the torch axis (208) passes, and the baffle (276) is positionable at an axial distance (b) from the chamber wall (220) effective for suppressing annular vortex shedding in plasma (228) discharged from the torch exit (216),
**characterized in that**
plasma source (200) is configured to select the axial distance (b) of the baffle (276) from the chamber wall (220) such that a noise peak in a noise power spectrum associated with the annular vortex shedding is removed.

5. The plasma source (200) of claim 4, comprising an adjustment device (288) configured for enabling selective adjustment of the axial distance (b) between the baffle (276) and the chamber wall (220).

6. The plasma source (200) of claim 4 or 5, wherein the aperture (280; 394) is circular or at least includes a circular portion, and the baffle (276) comprises an outer edge (392) and is positioned or sized such that a ratio Δ*Rₘᵢₙ*/*a* is about 0.4 or greater, or Δ*Rₘᵢₙ* is equal to about (0.25)*R* or greater, or both of the foregoing conditions, wherein Δ*Rₘᵢₙ* is a minimum radial distance between an edge of the aperture (280; 394) or the circular portion thereof and the outer edge (392) of the baffle (276), *a* is an axial distance between the torch exit (216) and the baffle (276), and R is the radius of the aperture (280; 394) of the circular portion thereof.

7. The plasma source (200) of any of the preceding claims 4 to 6, wherein the aperture (280; 394) is circular or at least includes a circular portion, and the aperture (280; 394) or the circular portion has a radius substantially the same as a radius of the torch exit (216).

8. The plasma source (200) of any of the preceding claims 4 to 7, wherein the baffle (276) is composed of a material selected from the group consisting of a high-temperature metal, a high-temperature alloy, a high-temperature nickel alloy, and a high-temperature ceramic.

9. The plasma source (200) of any of the preceding claims 4 to 8, wherein the baffle (276) is orthogonal to the torch axis (208).

10. The plasma source (200) of any of the preceding claims 4 to 9, wherein the baffle (276) has a cross-sectional area smaller than a cross-sectional area of the chamber (212) in a region between the torch exit (216) and the chamber wall (220).

11. The plasma source (200) of any of the preceding claims 4 to 10, wherein the chamber (212) comprises an inside surface, and the baffle (276) comprises an outer edge (392) spaced (c) from the inside surface along a radial direction.

12. The plasma source (200) of any of the preceding claims 4 to 11, wherein the plasma torch (204) has a configuration comprising at least one of:
the plasma torch (204) comprises a first tube (232) and a second tube (236 or 240) coaxially surrounding the first tube such that an annular conduit is defined between the first tube (232) and the second tube (236 or 240), wherein the sample inlet (244; 542) communicates with the first tube (232) and the plasma-forming gas inlet (248; 544) communicates with the annular conduit;
the plasma torch (204) comprises an auxiliary gas inlet (252; 548), a first tube (232), a second tube (236) coaxially surrounding the first tube (232), and a third tube (240) coaxially positioned between the first tube (232) and the second tube (236), such that a first annular conduit is defined between the first tube (232) and the third tube (240) and a second annular conduit is defined between the second tube (236) and the third tube (240), wherein the sample inlet (244; 542) communicates with the first tube (232), the plasma-forming gas inlet (248; 544) communicates with the first annular conduit or the second annular conduit, and the auxiliary gas inlet (252; 548) communicates with the first annular conduit or the second annular conduit.

13. The plasma source (200) of any of the preceding claims 4 to 12, wherein the plasma torch (204) comprises:
a first tube (232) communicating with the sample inlet (244; 542) and comprising a sample outlet (256);
a second tube (236 or 240) coaxially surrounding the first tube (232) and terminating at the torch exit (216), the second tube (236 or 240) forming an annular conduit communicating with the plasma-forming gas inlet (248; 544); and
an interaction region (264) surrounded by the second tube (236 or 240) and communicating with the sample outlet (256) and the annular conduit.

14. The plasma source (200) of any of the preceding claims 4 to 13, wherein the chamber wall (220) comprises a photon optics component (268; 570) or an ion optics component (268; 570).

15. A sample analysis system (500), comprising:
the plasma source (200) of any of claims 4 to 14; and
an analytical instrument (512) configured to acquire data from sample atoms produced by the plasma source (200).

## Patentansprüche

1. Ein Verfahren zum Erzeugen von Probenatomen, das folgende Schritte aufweist:
Erzeugen von Plasma (228) in einem Plasmabrenner (204), der einen Brennerausgang (216) aufweist, der zu einer Brennerachse (208) koaxial ist;
Ausbringen des Plasmas (228) aus dem Brennerausgang (216) in eine Kammer (212) entlang der Brennerachse (208) durch eine Öffnung (280; 394) einer Ablenkplatte (276) in der Kammer (212) und hin zu einer Kammerwand (220), die die Kammer (212) zumindest teilweise definiert, wobei die Ablenkplatte (276) in einem axialen Abstand (b) zu der Kammerwand (220) positioniert ist, der bezüglich eines Unterdrückens einer Ringwirbelablösung in dem ausgebrachten Plasma (228) wirksam ist; und
Injizieren einer Probe in das Plasma (228), um die Probenatome zu erzeugen,
**gekennzeichnet durch**
Auswählen des axialen Abstands (b) der Ablenkplatte (276) zu der Kammerwand (220) derart, dass ein Rauschpeak in einem der Ringwirbelablösung zugeordneten Rauschleistungsspektrum beseitigt wird.

2. Ein Verfahren zum Analysieren einer flüssigen Probe, das folgende Schritte aufweist:
Erzeugen von Probenatomen gemäß dem Verfahren nach Anspruch 1; und
Messen eines Attributs der Probenatome.

3. Das Verfahren gemäß Anspruch 2, bei dem das Messen eines Attributs der Probenatome aus der aus Folgenden bestehenden Gruppe ausgewählt ist:
Messen eines Spektralattributs der Probenatome;
Messen von von den Probenatomen emittierten Photonen;
Lenken von von den Probenatomen emittierten Photonen in ein optisches Emissionsspektrometer (512) und spektrales Auflösen der Photonen nach der Wellenlänge;
Erzeugen von Ionen aus den Probenatomen, und Messen der Ionen; und
Erzeugen von Ionen aus den Probenatomen, Lenken der Ionen in ein Massenspektrometer (512) und spektrales Auflösen der Ionen nach dem Verhältnis von Masse zu Ladung.

4. Eine Plasmaquelle (200), die folgende Merkmale aufweist:
eine Kammer (212), die eine Kammerwand (220) aufweist;
einen Plasmabrenner (204), der einen Probeneinlass (244; 542), einen plasmabildenden Gaseinlass (248; 544) und einen Brennerausgang (216) aufweist, wobei der Brennerausgang (216) koaxial zu einer Brennerachse (208) ist;
eine Energiequelle (224; 546), die zum Erzeugen von Plasma (228) in dem Plasmabrenner (204) konfiguriert ist; und
eine Ablenkplatte (276) zwischen dem Brennerausgang (216) und der Kammerwand (220), wobei die Ablenkplatte (276) eine Öffnung (280; 394) aufweist, durch die die Brennerachse (208) verläuft, und die Ablenkplatte (276) in einem axialen Abstand (b) zu der Kammerwand (220) positionierbar ist, der bezüglich eines Unterdrückens einer Ringwirbelablösung in aus dem Brennerausgang (216) ausgebrachtem Plasma (228) wirksam ist,
**dadurch gekennzeichnet, dass**
die Plasmaquelle (200) dazu konfiguriert ist, den axialen Abstand (b) der Ablenkplatte (276) zu der Kammerwand (220) derart auszuwählen, dass ein Rauschpeak in einem der Ringwirbelablösung zugeordneten Rauschleistungsspektrum beseitigt wird.

5. Die Plasmaquelle (200) gemäß Anspruch 4, die eine Anpassungsvorrichtung (288) aufweist, die dazu konfiguriert ist, eine selektive Anpassung des axialen Abstands (b) zwischen der Ablenkplatte (276) und der Kammerwand (220) zu ermöglichen.

6. Die Plasmaquelle (200) gemäß Anspruch 4 oder 5, bei der die Öffnung (280; 394) kreisförmig ist oder zumindest einen kreisförmigen Abschnitt umfasst und die Ablenkplatte (276) einen Außenrand (392) aufweist und derart positioniert oder bemessen ist, dass ein Verhältnis Δ*Rₘᵢₙ*/*a* etwa 0,4 oder mehr beträgt oder Δ*Rₘᵢₙ* gleich etwa (0,25)*R* oder größer ist oder beide vorstehende Bedingungen erfüllt sind, wobei Δ*Rₘᵢₙ* ein minimaler radialer Abstand zwischen einem Rand der Öffnung (280; 394) oder des kreisförmigen Abschnitts derselben und dem Außenrand (392) der Ablenkplatte (276) ist, *a* ein axialer Abstand zwischen dem Brennerausgang (216) und der Ablenkplatte (276) ist und *R* der Radius der Öffnung (280; 394) des kreisförmigen Abschnitts derselben ist.

7. Die Plasmaquelle (200) gemäß einem der vorhergehenden Ansprüche 4 bis 6, bei der die Öffnung (280; 394) kreisförmig ist oder zumindest einen kreisförmigen Abschnitt umfasst und die Öffnung (280; 394) oder der kreisförmige Abschnitt einen Radius aufweist, der im Wesentlichen derselbe ist wie ein Radius des Brennerausgangs (216).

8. Die Plasmaquelle (200) gemäß einem der Ansprüche 4 bis 7, bei der die Ablenkplatte (276) aus einem Material zusammengesetzt ist, das aus der aus einem Hochtemperaturmetall, einer Hochtemperaturlegierung, einer Hochtemperatur-Nickellegierung und einer Hochtemperaturkeramik bestehenden Gruppe ausgewählt ist.

9. Die Plasmaquelle (200) gemäß einem der vorhergehenden Ansprüche 4 bis 8, bei der die Ablenkplatte (276) orthogonal zu der Brennerachse (208) ist.

10. Die Plasmaquelle (200) gemäß einem der vorhergehenden Ansprüche 4 bis 9, bei der die Ablenkplatte (276) in einer Region zwischen dem Brennerausgang (216) und der Kammerwand (220) eine Querschnittsfläche aufweist, die kleiner ist als eine Querschnittsfläche der Kammer (212).

11. Die Plasmaquelle (200) gemäß einem der vorhergehenden Ansprüche 4 bis 10, bei der die Kammer (212) eine Innenoberfläche aufweist und die Ablenkplatte (276) einen Außenrand (392) aufweist, der entlang einer radialen Richtung von der Innenoberfläche beabstandet (c) ist.

12. Die Plasmaquelle (200) gemäß einem der vorhergehenden Ansprüche 4 bis 11, bei der der Plasmabrenner (204) eine Konfiguration aufweist, die zumindest eine der Folgenden umfasst:
der Plasmabrenner (204) weist ein erstes Rohr (232) und ein zweites Rohr (236 oder 240), das das erste Rohr derart koaxial umgibt, dass zwischen dem ersten Rohr (232) und dem zweiten Rohr (236 oder 240) eine ringförmige Rohrleitung definiert ist, auf, wobei der Probeneinlass (244; 542) mit dem ersten Rohr (232) kommuniziert und der plasmabildende Gaseinlass (248; 544) mit der ringförmigen Rohrleitung kommuniziert;
der Plasmabrenner (204) weist einen Hilfsgaseinlass (252; 548), ein erstes Rohr (232), ein das erste Rohr (232) koaxial umgebendes zweites Rohr (236) und ein koaxial zwischen dem ersten Rohr (232) und dem zweiten Rohr (236) positioniertes drittes Rohr (240) auf, derart, dass eine erste ringförmige Rohrleitung zwischen dem ersten Rohr (232) und dem dritten Rohr (240) definiert ist und eine zweite ringförmige Rohrleitung zwischen dem zweiten Rohr (236) und dem dritten Rohr (240) definiert ist, wobei der Probeneinlass (244; 542) mit dem ersten Rohr (232) kommuniziert, der plasmabildende Gaseinlass (248; 544) mit der ersten ringförmigen Rohrleitung oder der zweiten ringförmigen Rohrleitung kommuniziert und der Hilfsgaseinlass (252; 548) mit der ersten ringförmigen Rohrleitung oder der zweiten ringförmigen Rohrleitung kommuniziert.

13. Die Plasmaquelle (200) gemäß einem der Ansprüche 4 bis 12, bei der der Plasmabrenner (204) folgende Merkmale aufweist:
ein erstes Rohr (232), das mit dem Probeneinlass (244; 542) kommuniziert und einen Probenauslass (256) aufweist;
ein zweites Rohr (236 oder 240), das das erste Rohr (232) koaxial umgibt und an dem Brennerausgang (216) endet, wobei das zweite Rohr (236 oder 240) eine ringförmige Rohrleitung bildet, die mit dem plasmabildenden Gaseinlass (248; 544) kommuniziert; und
eine Wechselwirkungsregion (264), die von dem zweiten Rohr (236 oder 240) umgeben ist und mit dem Probenauslass (256) und der ringförmigen Rohrleitung kommuniziert.

14. Die Plasmaquelle (200) gemäß einem der Ansprüche 4 bis 13, bei der die Kammerwand (220) eine Photonenoptikkomponente (268; 570) oder eine lonenoptikkomponente (268; 570) aufweist.

15. Ein Probenanalysesystem (500), das folgende Merkmale aufweist:
die Plasmaquelle (200) gemäß einem der Ansprüche 4 bis 14; und
ein analytisches Instrument (512), das dazu konfiguriert ist, Daten aus durch die Plasmaquelle (200) erzeugten Probenatomen zu gewinnen.

## Revendications

1. Procédé pour produire des atomes d'échantillon, comprenant le fait de:
générer du plasma (228) dans une torche à plasma (204) comprenant une sortie de torche (216) coaxiale à un axe de torche (208);
décharger le plasma (228) de la sortie de torche (216) vers une chambre (212) le long de l'axe de torche (208), à travers une ouverture (280; 394) d'un déflecteur (276) dans la chambre (212), et vers une paroi de chambre (220) qui définit au moins partiellement la chambre (212), où le déflecteur (276) est positionné à une distance axiale (b) de la paroi de chambre (220) efficace pour supprimer l'émission de tourbillons annulaires dans le plasma déchargé (228); et
injecter un échantillon dans le plasma (228) pour produire lesdits atomes d'échantillon,
**caractérisé par** le fait de
sélectionner la distance axiale (b) du déflecteur (276) de la paroi de chambre (220) de sorte que soit éliminée une pointe de bruit dans un spectre de puissance de bruit associé à l'émission de tourbillons annulaires.

2. Procédé d'analyse d'un échantillon liquide, comprenant le fait de:
produire des atomes d'échantillon selon le procédé de la revendication 1; et
mesurer un attribut des atomes d'échantillons.

3. Procédé selon la revendication 2, dans lequel la mesure d'un attribut des atomes d'échantillon est sélectionnée parmi le groupe composé du fait de:
mesurer un attribut spectral des atomes d'échantillon;
mesurer les photons émis par les atomes d'échantillon;
orienter les photons émis par les atomes d'échantillons vers un spectromètre d'émission optique (512), et résoudre de manière spectrale les photons selon la longueur d'onde;
produire des ions à partir des atomes d'échantillon, et mesurer les ions; et
produire des ions à partir des atomes d'échantillon, orienter les ions vers un spectromètre de masse (512), et résoudre de manière spectrale les ions selon le rapport masse/charge.

4. Source de plasma (200), comprenant:
une chambre (212) comprenant une paroi de chambre (220);
une torche à plasma (204) comprenant une entrée d'échantillon (244; 542), une entrée de gaz de formation de plasma (248; 544), et une sortie de torche (216), où la sortie de torche (216) est coaxiale à un axe de torche (208);
une source d'énergie (224; 546) configurée pour générer du plasma (228) dans la torche à plasma (204); et
un déflecteur (276) entre la sortie de torche (216) et la paroi de chambre (220), où le déflecteur (276) comprend une ouverture (280; 394) à travers laquelle passe l'axe de torche (208), et le déflecteur (276) peut être positionné à une distance axiale (b) de la paroi de chambre (220) efficace pour supprimer l'émission de tourbillons annulaires dans le plasma (228) déchargé de la sortie de torche (216),
**caractérisée par le fait que**
la source de plasma (200) est configurée pour sélectionner la distance axiale (b) du déflecteur (276) par rapport à la paroi de chambre (220) de sorte que soit éliminée une pointe de bruit dans un spectre de puissance de bruit associé à l'émission de tourbillons annulaires.

5. Source de plasma (200) selon la revendication 4, comprenant un dispositif de réglage (288) configuré pour permettre un réglage sélectif de la distance axiale (b) entre le déflecteur (276) et la paroi de chambre (220).

6. Source de plasma (200) selon la revendication 4 ou 5, dans laquelle l'ouverture (280; 394) est circulaire ou comporte au moins une partie circulaire, et le déflecteur (276) comprend un bord extérieur (392) et est positionné ou dimensionné de sorte qu'un rapport Δ*Rₘᵢₙ*/*a* soit d'environ 0,4 ou supérieur, ou que Δ*Rₘᵢₙ* soit égal à environ (0,25)R ou supérieur, ou les deux des conditions précédentes, où Δ*Rₘᵢₙ* est une distance radiale minimale entre un bord de l'ouverture (280; 394) ou sa partie circulaire et le bord extérieur (392) du déflecteur (276), *a* est une distance axiale entre la sortie de torche (216) et le déflecteur (276), et *R* est le rayon de l'ouverture (280; 394) de sa partie circulaire.

7. Source de plasma (200) selon l'une quelconque des revendications précédentes 4 à 6, dans laquelle l'ouverture (280; 394) est circulaire ou comporte au moins une partie circulaire, et l'ouverture (280; 394) ou la partie circulaire présente un rayon sensiblement identique à un rayon de la sortie de torche (216).

8. Source de plasma (200) selon l'une quelconque des revendications précédentes 4 à 7, dans laquelle le déflecteur (276) est composé d'un matériau choisi parmi le groupe composé d'un métal à haute température, d'un alliage à haute température, d'un alliage de nickel à haute température et d'une céramique à haute température.

9. Source de plasma (200) selon l'une quelconque des revendications précédentes 4 à 8, dans laquelle le déflecteur (276) est orthogonal à l'axe de torche (208).

10. Source de plasma (200) selon l'une quelconque des revendications précédentes 4 à 9, dans laquelle le déflecteur (276) présente une superficie de section plus petite qu'une superficie de section de la chambre (212) dans une région située entre la sortie de torche (216) et la paroi de chambre (220).

11. Source de plasma (200) selon l'une quelconque des revendications précédentes 4 à 10, dans laquelle la chambre (212) comprend une surface intérieure, et le déflecteur (276) comprend un bord extérieur (392) espacé (c) de la surface intérieure dans une direction radiale.

12. Source de plasma (200) selon l'une quelconque des revendications précédentes 4 à 11, dans laquelle la torche à plasma (204) présente une configuration comprenant au moins l'un parmi:
la torche à plasma (204) comprend un premier tube (232) et un deuxième tube (236 ou 240) entourant coaxialement le premier tube de sorte que soit défini un conduit annulaire entre le premier tube (232) et le deuxième tube (236 ou 240), où l'entrée d'échantillon (244; 542) communique avec le premier tube (232) et l'entrée de gaz de formation de plasma (248; 544) communique avec le conduit annulaire;
la torche à plasma (204) comprend une entrée de gaz auxiliaire (252; 548), un premier tube (232), un deuxième tube (236) entourant coaxialement le premier tube (232), et un troisième tube (240) positionné coaxialement entre le premier tube (232) et le deuxième tube (236) de sorte que soit défini un premier conduit annulaire entre le premier tube (232) et le troisième tube (240) et que soit défini un deuxième conduit annulaire entre le deuxième tube (236) et le troisième tube (240), où l'entrée d'échantillon (244; 542) communique avec le premier tube (232), l'entrée de gaz de formation de plasma (248; 544) communique avec le premier conduit annulaire ou le deuxième conduit annulaire et l'entrée de gaz auxiliaire (252; 548) communique avec le premier conduit annulaire ou le deuxième conduit annulaire.

13. Source de plasma (200) selon l'une quelconque des revendications précédentes 4 à 12, dans laquelle la torche à plasma (204) comprend:
un premier tube (232) communiquant avec l'entrée d'échantillon (244; 542) et comprenant une sortie d'échantillon (256);
un deuxième tube (236 ou 240) entourant coaxialement le premier tube (232) et se terminant à la sortie de torche (216), le deuxième tube (236 ou 240) formant un conduit annulaire communiquant avec l'entrée de gaz de formation de plasma (248; 544); et
une région d'interaction (264) entourée par le deuxième tube (236 ou 240) et communiquant avec la sortie d'échantillon (256) et le conduit annulaire.

14. Source de plasma (200) selon l'une quelconque des revendications précédentes 4 à 13, dans laquelle la paroi de chambre (220) comprend un composant d'optique photonique (268; 570) ou un composant d'optique ionique (268; 570).

15. Système d'analyse d'échantillons (500), comprenant:
la source de plasma (200) selon l'une quelconque des revendications 4 à 14; et
un instrument analytique (512) configuré pour acquérir des données des atomes d'échantillons produits par la source de plasma (200).
